Europäisches Patentamt

European Patent Office

Office européen des brevets

(11) Publication number: 0 310 292
A2

# EUROPEAN PATENT APPLICATION

(21) Application number: 88308749.6

(22) Date of filing: 21.09.88

(51) Int. Cl.⁴: F04C 15/00 , F01C 21/02

(30) Priority: 02.10.87 GB 8723129

(43) Date of publication of application:
05.04.89 Bulletin 89/14

(84) Designated Contracting States:
DE FR GB IT

(71) Applicant: LUCAS INDUSTRIES public limited company
Great King Street
Birmingham, B19 2XF West Midlands(GB)

(72) Inventor: Lane, Jeffrey Arthur
9 Bartley Close
Solihull West Midlands B92 7RH(GB)

(74) Representative: Cuddon, George Desmond et al
MARKS & CLERK Alpha Tower Suffolk Street
Queensway
Birmingham B1 1TT(GB)

(54) Bearing bush for a gear pump.

(57) The bore of a bearing bush (11 or 13) for a gear pump has radially inwardly extending projections (20, 21) spaced equi-angularly on either side of a line of action (15) of an operating load on a gear shaft (10) within the bore, to maintain the shaft (10) at an effective distance from a recess (16) to which fluid under pressure is supplied, the recess being located on the line of action (15) of the load and diametrally opposite the projections (20,21).

FIG.3.

## "BEARING BUSH FOR A GEAR PUMP"

This invention relates to bearing bushes for use in external gear pumps, that is pumps in which liquid is displaced by the action of two externally meshed tooth gears.

As described in U.S. Patent 4573889, incorporated herein by reference, shafts of the gears of a gear pump are supported in a housing by means of bearing bushes which have end faces abutting the end faces of the gears. As described in the above patent, operating forces on the gears, including the pressure in the pump outlet, urge the gears in directions which provide areas of load concentration within the bores of the bearing bushes. Recesses are provided within the bores, these recesses lying at least partly within the areas of load concentration and being supplied with a fluid under pressure from the pump outlet, thereby creating a hydrostatic bearing to support the load and to assist in dissipation of heat.

It is a disadvantage of such an arrangement that at start-up and low pump speeds the pump operating forces are reduced, and may result in an increased clearance between a gear shaft and the zone of the bearing bore which includes the recess. Such an increased clearance will be accompanied by excessive leakage from the recesses to a low pressure zone, by way of the shaft-bore clearance. Additionally, in normal use the tips of the gear teeth extend radially beyond the bearing periphery at the low pressure side thereof, to effect sealing engagement with the pump body. At low speeds the teeth can move away from this engagement, permitting leakage between the inter-tooth spaces, across the gear tips.

It is an object of the invention to overcome the foregoing disadvantage.

According to the invention there is provided a bearing bush for a pump in which rotation of externally meshed gears is accompanied by displacement of a liquid thereby, said bush having a substantially cylindrical bore and a recess within said bore adjacent a zone thereof, at which, in use, a load on shaft within said bore is concentrated, a passage for supplying fluid under pressure to said recess, and a projection in said bore substantially diametrally opposite said recess for limiting the distance by which a shaft in said bore can move away from said recess.

Preferably said bush includes a plurality of said projections, equi-angularly spaced on opposite sides of a line of action of said load on the shaft.

An embodiment of the invention will now be described by way of example only and with reference to the accompanying drawings in which:-

Figure 1 is a section through a known bearing bush and shaft therein, in normal use of a gear pump of which it forms part,

Figure 2 is a section, corresponding to Figure 1 at a low speed of the pump,

Figure 3 is a section corresponding to Figure 2 of a bush according to the invention, and

Figure 4 is a view on arrow 4 in Figure 3.

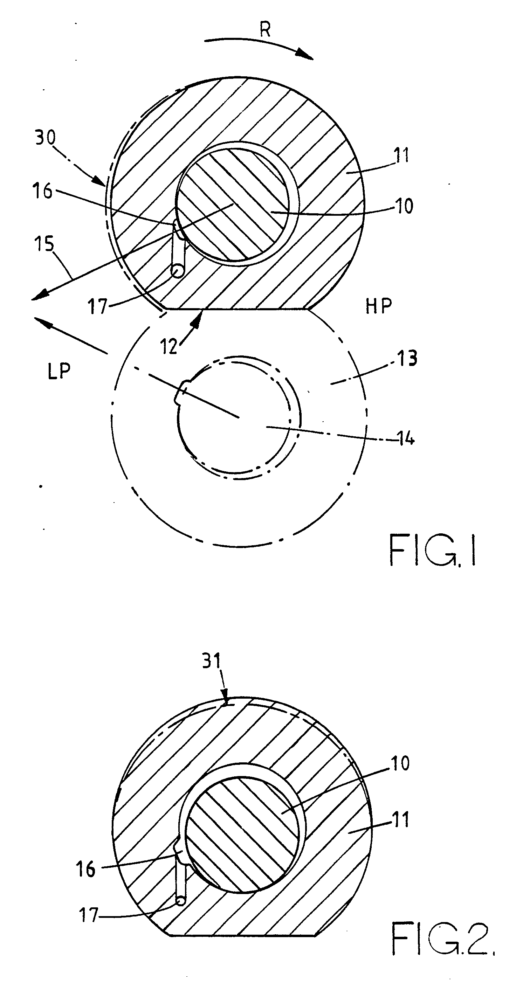

As shown in Figure 1 a shaft 10 of a gear in a gear pump is shown within the bore of a bearing bush 11. In this and other figures the diametral clearance between the shaft 10 and the bore of the bush 11 is exaggerated. The bush 11 is generally cylindrical but is provided with a flat face 12 which, in use, abuts a corresponding flat on a generally similar bush 13 for the shaft 14 of a meshing gear. In use pressure in the pump outlet and reaction between the meshing gear teeth results in a force on the shaft 10, the line of action 15 of this force being inclined at 65° to a plane joining the axes of the bushes 11, 13. As a result of changing operating conditions of the pump the direction of the line of action 15 may vary but falls within a zone lying generally in the area of the first quadrant, in the direction of rotation R of the shaft 10, from the plane joining the bush axes. A recess 16 in the bore of the bush 11 lies at least partly within the zone over which the line of action 15 will occur, the recess 16 being supplied with liquid from the outlet of the pump by way of passage 17. This arrangement provides a hydrostatic bearing which supports the load on the shaft 10 and assists in heat dissipation. The tips of the gear teeth extend locally beyond the periphery of the bearing bush 11, as indicated at 30, as a result of movement under the force acting on line 15. In this condition the teeth tips engage a local groove in the pump body to prevent leakage from the high pressure side HP of the pump to its low pressure side LP.

As shown in Figure 2 during start-up or low-running speeds of the pump the shaft 10 may move away from the recess 16 so that excessive amounts of liquid leak from the passage 17 into the bore of the bush 11, this liquid passing through the clearance between the shaft and the bush 11 to a low pressure zone. In this condition, indicated at 31, the tooth tips no longer engage the local groove in the body, and leakage between the high pressure and low pressure sides of the pump, across the tooth tips, can occur.

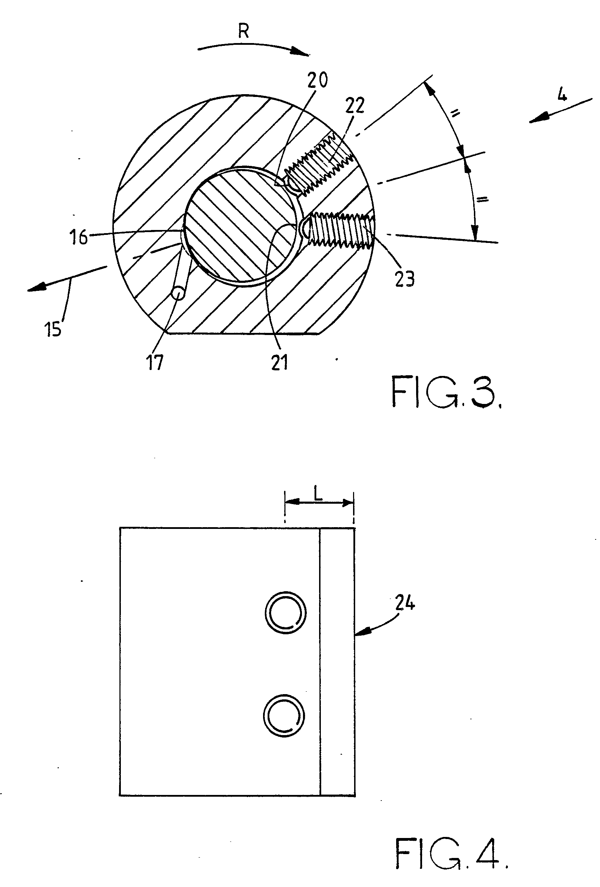

Figure 3 shows a bearing according to the invention in which the shaft 10 is prevented from moving away from the recess 16 by an amount sufficient to result in excessive leakage. In this case the bush 11 has two projections 20, 21 extending radially inwardly of its bore. The projections 20, 21 are generally diametrally opposite the recess 16 and are equi-angularly disposed on either side of the line of action 15. The angular spacing of the projections 20, 21 is such that the shaft 10 cannot move by a substantial distance in any direction from its normal operating position. In the present example the projections 20, 21 subtend an angle of 50° at the centre of the bush, but may subtend angles of between 30° and 90°.

The projections 20, 21 may conveniently be formed by drilling and tapping the bush radially so as to leave a relatively thin layer of metal adjacent the bore. Socket screws 22, 23 are then driven into the tapped holes and urge steel balls against the thin layers to strain the latter radially inwardly. The thin layers typically have thicknesses of between 1.5mm and 2.5mm before deformation.

The projections 20, 21 extend radially inwardly of the remainder of the bore by amounts such that they lie clear of the circumference of the shaft 10 when the latter is operating normally under a load on the line of action 15, and are also sufficiently small as to maintain normal lubrication flow between the shaft 10 and the bearing bore under load. Leakage from the recess 16 is thereby maintained at a minimum at low speeds. The tooth tips are also maintained in sealing engagement with the local groove in the pump body, as indicated at 30 in Figure 1.

The recess 16 and projections 20, 21 have the same spacings L from a reference face 24 (Figure 4) on the bush. In the present example the reference face 24 is the end face of the bush which sealingly engages an end face of the gear, and the recess 16 and projections 20, 21 are substantially closer to the face 24 than to the opposite end face of the bush.

## Claims

1. A bearing bush for a pump in which rotation of externally meshed gears is accompanied by displacement of a liquid, said bush (11 or 13) having a substantially cylindrical bore and a recess (16) within said bore adjacent a zone (15) thereof at which, in use, a load on a shaft (10) within said bore is concentrated, and a passage (17) for supplying fluid under pressure to said recess (16), characterised in that there is provided a projection (20 or 21) in said bore substantially diametrally opposite said recess (16) for limiting the distance by which a shaft (10) in said bore can move away from said recess.

2. A bearing bush as claimed in Claim 1 which includes a plurality of said projections (20, 21), equi-angularly spaced on opposite sides of a line of action (15) of said load on the shaft (10).

3. A bearing bush as claimed in Claim 2 in which said projections (20, 21) subtend an angle of between 30° and 90° at the axis of said bore.

4. A bearing bush as claimed in Claim 3 in which said projections (20, 21) subtend an angle of 50° at the axis of said bore.

5. A bearing bush as claimed in any preceding claim in said projection (20, 21) is defined by a zone of reduced thickness of the bush body adjacent said bore, said zone being deformed radially inwardly of the bore.

6. A bearing bush as claimed in any preceding claim in which the radially inward extent of said projection (20, 21) is clear of said shaft (10) in normal loaded operation thereof.

FIG.1

FIG.2.

FIG.3.

FIG.4.